# EUROPEAN PATENT SPECIFICATION

(11) **EP 4 663 089 B1**
(45) Date of publication and mention of the grant of the patent: **30.09.2026**
(21) Application number: 25181087.5
(22) Date of filing: 05.06.2025
(51) Int. Cl.: B08B 13/00, A47L 15/00, A47L 15/50, A61L 2/24

(54) **PALLET FOR LOGISTIC HANDLING AND PROCESSING OF MOVABLE LOAD-CARRYING STRUCTURES DURING WASHING PROCESSES IN THE PHARMACEUTICAL INDUSTRY, ASSEMBLY COMPRISING SAID PALLET AND A LOAD-CARRYING STRUCTURE, METHOD FOR LOADING/UNLOADING SAID LOAD-CARRYING STRUCTURE BY MEANS OF SAID PALLET**
PALETTE FÜR DIE LOGISTIKHANDHABUNG UND BEARBEITUNG VON BEWEGLICHEN LASTTRAGENDEN STRUKTUREN BEI WASCHVORGÄNGEN DER PHARMAZEUTISCHEN INDUSTRIE, ANORDNUNG MIT DIESER PALETTE UND EINER LASTTRAGENDEN STRUKTUR, VERFAHREN ZUM BE-/ENTLADEN EINER LASTTRAGENDEN STRUKTUR MITTELS DIESER PALETTE
PALETTE POUR LA MANIPULATION LOGISTIQUE ET LE TRAITEMENT DE STRUCTURES PORTEUSES MOBILES PENDANT DES PROCESSUS DE LAVAGE DANS L'INDUSTRIE PHARMACEUTIQUE, ENSEMBLE COMPRENANT UNE TELLE PALETTE ET UNE STRUCTURE DE SUPPORT DE CHARGE, PROCÉDÉ DE CHARGEMENT/DÉCHARGEMENT DE LA STRUCTURE PORTE-CHARGES AU MOYEN DE LA PALETTE

(30) Priority: 05.06.2024 IT 202400012901
(43) Date of publication of application: 17.12.2025
(73) Proprietor: IWT S.r.L., 21020 Casale Litta (VA) (IT)
(72) Inventor: PERARI, Andrea, I-28041 ARONA (NO) (IT); COSOLO, Maurizio, I-20013 MAGENTA (MI) (IT)
(74) Representative: Metroconsult Srl

(56) References cited:
- EP-A1- 2 674 093
- EP-A1- 2 962 617
- DE-A1- 1 628 535
- DE-A1- 19 513 994
- DE-A1- 3 534 838

## Description

### Field of the invention

The present invention relates to a pallet for supporting load-carrying structures for supporting and moving production elements used in production processes in the pharmaceutical industry.

In particular, such pallet is used for logistic handling of a movable, e.g. slidable, load-carrying structure, said load-carrying structure being shaped as a platform and/or basket and/or rack and/or skid and/or frame and/or trolley suitable for collecting, supporting and orienting parts like, for example, equipment or glassware used in production processes in the pharmaceutical industry, and therefore suitable for moving, inserting, removing and transferring said movable load-carrying structure in washing machines.

The invention also relates to an assembly formed of said pallet and one of said load-carrying structures.

The invention further relates to a method for loading/unloading a load-carrying structure onto/from a loading/unloading station by means of said pallet.

### Background art

In the field of clinical research and pharmaceuticals, it is common practice to use parts, instruments, equipment, containers and glassware that need to be subjected to careful washing and cleaning after use or anyway prior to subsequent use, in order to avoid process pollution or contamination.

For such washing, specific machines are used which have a compartment where such parts can be loaded, and from which such parts can be removed when washing is complete.

In order to optimize the effectiveness and efficiency of the washing process and, most importantly, to make the process repeatable in the same conditions, the parts are treated after having been positioned on specific movable load-carrying structures, shaped as a platform and/or basket and/or rack and/or skid and/or frame and/or trolley, which perform the function of supporting and correctly holding such parts during said process inside the washing machine.

It should be noted that such load-carrying structures may be configured either as simple frames or platforms, e.g. when simple overturned containers or cans have to be processed, or as complex, articulated structures, and may in some cases incorporate at least one hydraulic duct interfacing, inside the washing machine, with a fitting or a manifold, and said hydraulic duct is used to receive, transfer and spray pressurized washing liquid near and/or into parts that are particularly difficult to process, such as sculpted instruments or instruments having complex shapes, like parts of systems used in pharmaceutical plants and laboratories, or parts, referred to as glassware, such as vials, test tubes, beakers, Erlenmeyer flasks, funnels, graduated cylinders, pipettes, flasks, and burettes.

Document DE 195 13 994 A1 discloses an automatic rinsing unit especially for laboratories and hospitals for programmed cleaning.

Document EP 2 962 617 A1 discloses a transport trolley for washing baskets of a cleaning and disinfecting device.

Document EP 2 674 093 A1 discloses a device for loading a washing machine with components to be washed and an apparatus comprising this device.

Document DE 35 34 838 A1 discloses a rack for thermodisinfectors.

Document DE 1628535 A1 discloses a device for rinsing dishes.

In this context, the Applicant observed that the logistic processing of loads, and hence of said load-carrying structures, requires handling a number of said structures, which take room and which need to be allocated for storage or during the steps of preparing said washing machines for loading and/or unloading.

To do so, i.e. to move said load-carrying structures, trolleys are typically employed which house said structures, or specific dedicates elevators are used which provide the additional function of positioning and storing said load-carrying structures on racks at variable heights.

The applicant observes that all this results in considerable space occupation by the means in use, including trolleys or elevators.

In addition, when elevators are used, since the pharmaceutical industry is subject to strict requirements as far as cleaning and operating conditions are concerned (see Good Manufacturing Practices), they have to be specially designed and certified, thus adding to the costs to be incurred for solutions employing ad-hoc elevators.

The Applicant felt the need for a solution, a means, and a method suitable to overcome the above-mentioned limitations and constraints, so as to improve the management of such load-carrying structures when they are loaded onto, and removed from, the washing machine during intermediate process phases, e.g. positioning and removing parts onto/from said load-carrying structures, as well as to reduce the space occupation and means necessary for storing said load-carrying structures.

It must also be pointed out that said load-carrying structures, in their most complex configuration and fully loaded, may weigh hundreds of kilograms, and this compels to use solutions that, especially when handling is done manually as in the case considered herein, must be structurally strong and, most importantly, capable of safely holding said load-carrying structures in position, particularly during logistic and transfer operations.

Furthermore, said solution, which is separate from, or anyway not incorporated into an elevator, is compatible with standard elevators already certified for pharmaceutical use, so that it does not necessarily require the use of additional lifting apparatus interfacing with said load-carrying structures.

This solution may also minimize the use of said trolleys or elevators, thus simplifying the logistics and reducing volume requirements. Therefore, it may prove a practical solution for storage as well.

### Summary of the invention

In accordance with a first aspect, the invention relates to an assembly for supporting and moving production elements used in production processes in the pharmaceutical industry according to claim 1.

In accordance with a second aspect, the invention relates to a pallet for supporting and moving load-carrying structures supporting production elements used in production processes in the pharmaceutical industry according to claim 14.

In accordance with a third aspect, the invention relates to a method for loading/unloading a load-carrying structure onto/from a loading/unloading station, e.g. a loading/unloading station of a washing machine according to claim 15.

In one or more of the above aspects, the invention may comprise one or more of the following preferred features.

Preferably, said movement structure is mounted on the frame of said load-carrying structure.

Preferably, said guiding structure is mounted on the supporting base of said pallet.

Preferably, said movement structure is mounted on the supporting base of said pallet.

Preferably, said guiding structure is mounted on the frame of said load-carrying structure.

Preferably, said movement system has at least one groove on said guiding structure for coupling with said movement structure.

Preferably, said movement system has at least one groove on said movement structure for coupling with said guiding structure.

Preferably, the movement structure comprises one or more rotatable elements.

Preferably, the at least one guiding structure comprises at least one guide.

Preferably, said at least one guide is configured to be coupled with said one or more rotatable elements.

Preferably, said respective groove extends along an outer circumference of the respective rotatable element.

Preferably, the engagement member comprises a bar.

Preferably, said bar is mounted on the supporting base of the pallet.

Preferably, said bar extends substantially in the second direction.

Preferably, said bar is rotatable about its longitudinal axis.

Preferably, the engagement member comprises one or more radial expansions.

Preferably, said one or more radial expansions extend radially from said bar.

Preferably, in the first position, the bar is so rotated that said one or more radial expansions do not interfere with the load-carrying structure.

Preferably, in the second position, the bar is so rotated that said one or more radial expansions interfere with the load-carrying structure and counter a movement of the load-carrying structure, relative to the pallet, in the second direction.

Preferably, said assembly comprises a locking structure.

Preferably, said locking structure is configured to counter a movement of said load-carrying structure, relative to said pallet, in a third direction.

Preferably, said third direction is transversal to a plane defined by said first and second directions.

Preferably, the locking structure comprises one or more first locking expansions.

Preferably, said one or more first locking expansions are mounted on the supporting base of the pallet.

Preferably, said one or more first locking expansions extend horizontally.

Preferably, said locking structure comprises one or more second locking expansions.

Preferably, said one or more second locking expansions belong to the frame of the load-carrying structure.

Preferably, said one or more second locking expansions extend horizontally.

Preferably, when the load-carrying structure is coupled with the pallet, said one or more second locking expansions are located in a position corresponding to said one or more first locking expansions.

Preferably, when the load-carrying structure is coupled with the pallet, said one or more second locking expansions are located at a lower height than said one or more first locking expansions.

Preferably, said engagement member comprises a strike element.

Preferably, said engagement member comprises a locking mechanism.

Preferably, said locking mechanism can be driven into a first configuration.

Preferably, in said first configuration, said locking mechanism co-operates with said strike element.

Preferably, in said first configuration, said locking mechanism counters the movement of the load-carrying structure relative to the pallet in the second direction.

Preferably, said locking mechanism can be driven into a second configuration.

Preferably, in said second configuration, said locking mechanism does not counter the movement of the load-carrying structure relative to the pallet in the second direction.

Preferably, said strike element is mounted on said pallet.

Preferably, said locking mechanism is mounted on the frame of said load-carrying structure.

Preferably, said strike element is mounted on the frame of said load-carrying structure.

Preferably, said locking mechanism is mounted on said pallet.

Preferably, said assembly comprises a centering structure.

Preferably, said centering structure is configured to provide centering and alignment during an operation of bringing the pallet close to a washing machine.

Preferably, said centering and alignment occur in the second direction.

Preferably, said centering structure comprises one or more centering elements.

Preferably, each centering element is positioned at a respective axial end of one of said one or more guides.

Preferably, each centering element may be fixed relative to said guide.

Preferably, each centering element may be oscillating relative to said guide.

### Brief description of the drawings

Further features and advantages will become apparent in light of the following detailed description of some embodiments of the invention. In such description reference will be made to the accompanying figures, which are also merely illustrative and non-limiting, wherein:
- Figure 1 shows a pallet in accordance with the present invention, in a first operating configuration;
- Figure 2 shows the pallet of Figure 1 in a second operating configuration;
- Figure 3 shows a basic configuration of a load-carrying structure that can be used in the present invention;
- Figures 4-5 show further embodiments of load-carrying structures that can be used in the present invention;
- Figure 6 shows an assembly in accordance with the present invention;
- Figure 7 shows the assembly of Figure 6 from a different angle;
- Figure 8 shows a magnified detail of Figure 2;
- Figures 9-10 show some magnified details of the assembly of Figure 6;
- Figure 11 shows a magnified detail of Figure 1;
- Figure 12 shows a different embodiment of the detail shown in Figure 11;
- Figure 13 shows an assembly in accordance with the present invention, brought close to a machine;
- Figure 14 shows a magnified detail of Figure 13;
- Figures 15-18 schematically show some possible structural details of an assembly in accordance with the present invention.

Note that the drawings are not necessarily in scale.

### Detailed description of some preferred embodiments of the invention

With reference to the annexed drawings, numeral 200 designates as a whole a pallet in accordance with the present invention.

Reference 100 indicates a load-carrying structure that can be used in the present invention.

Together, the pallet 200 and the load-carrying structure 100 form an assembly 300, which is also a subject of the present invention.

The load-carrying structure 100 comprises a frame 110 for supporting production elements used in production processes in the pharmaceutical industry.

In general, the load-carrying structure 100 may be shaped as a platform and/or a basket and/or a rack and/or a skid and/or a trolley, and is adapted to house, support and orient said production elements.

Production elements, also referred to as "parts", may be, for example, equipment or glassware used in production processes in the pharmaceutical industry.

As will become apparent below, the pallet 200 contributes to moving, inserting, removing and transferring the movable load-carrying structure 100 in washing machines.

As aforesaid, the frame 110 may have different shapes/dimensions as a function of the elements to be supported and/or of the machine in which the load-carrying structure 100 is to be inserted.

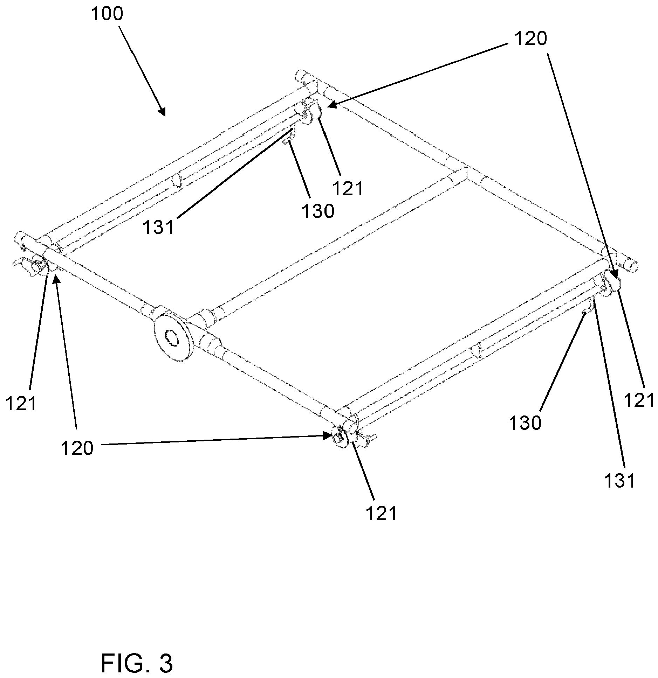

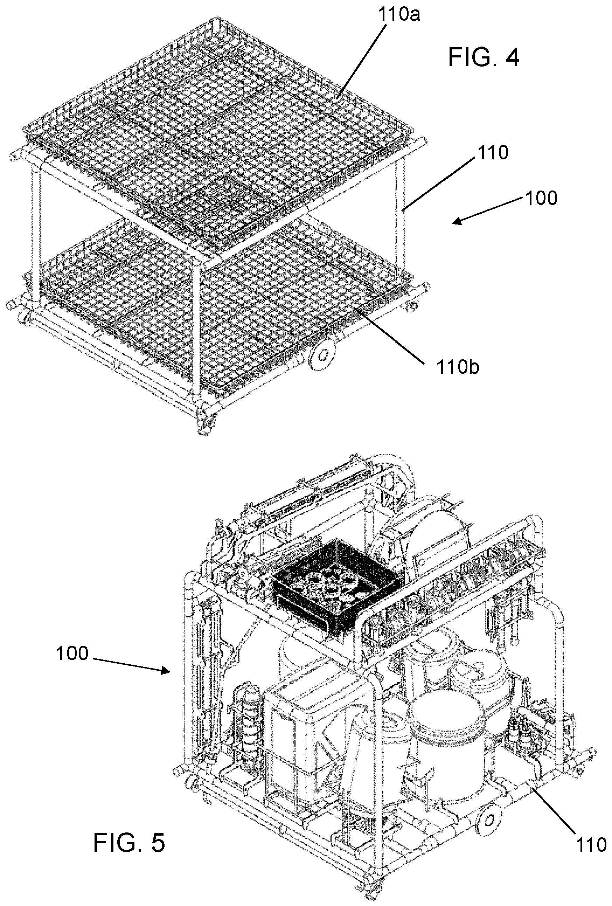

In the example of Figure 3, the frame 110 has a substantially planar conformation, and can be used for, for example, supporting overturned containers or cans. In the example of Figure 4, the frame 110 is shaped for supporting two load trays 110a-110b, on which several production elements can be arranged. In the example of Figure 5, the frame 110 has a complex shape and can house a plurality of different production elements.

The Applicant observes that the embodiment of Figure 3 may be, in general terms, representative of the minimum characteristics of the frame 110 (and of the load-carrying structure 100). The frame 110 has, in a plan view, a substantially rectangular or square conformation.

In one embodiment, the load-carrying structure 100 further comprises a movement structure 120, mounted on the frame 110 and configured to allow a movement of the frame 110. More generally, what is allowed is a movement of the entire load-carrying structure 100. Such movement may occur by skidding and/or sliding and/or rolling. Such movement may be a translation.

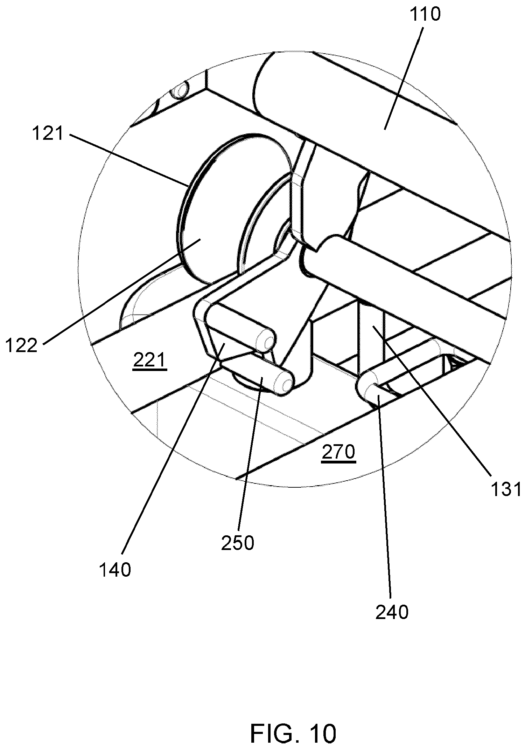

In one implementation example, the movement structure 120 may comprise one or more rotatable elements 121. For example, as shown in Figures 3, 9-10, such rotatable elements may be (or comprise) wheels. In a preferred embodiment, the movement structure 120 comprises four wheels 121, each one positioned at a respective corner of the rectangular/square profile of the frame 110.

In a different implementation example, the movement structure 120 may comprise sliding/skidding elements, e.g. skids.

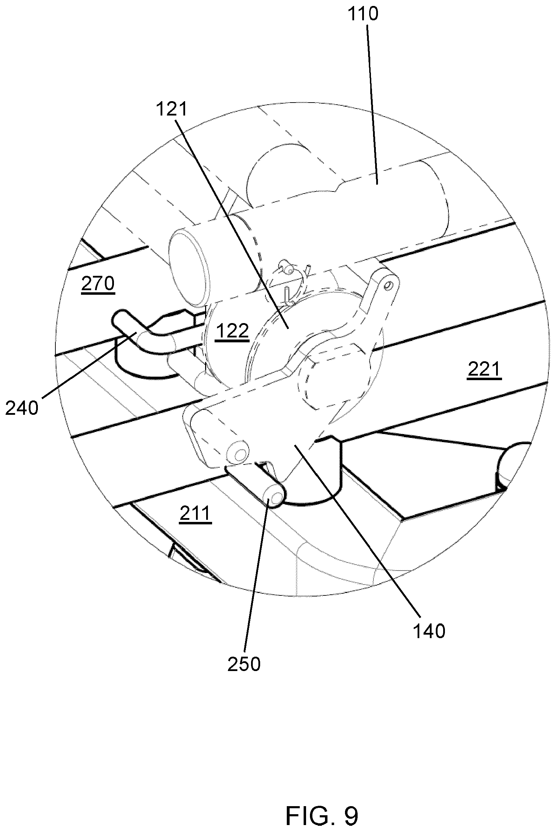

Preferably, each movement structure 120 has a respective groove 122. For example, said groove 122 may extend along an outer circumference of the rotatable element 121. In other words, the groove 122 develops on the radially external surface of the rotatable element 121. Figures 9-10 show one possible example of embodiment of the groove 122.

A functionally similar groove may be formed, in other embodiments, on said sliding/skidding elements.

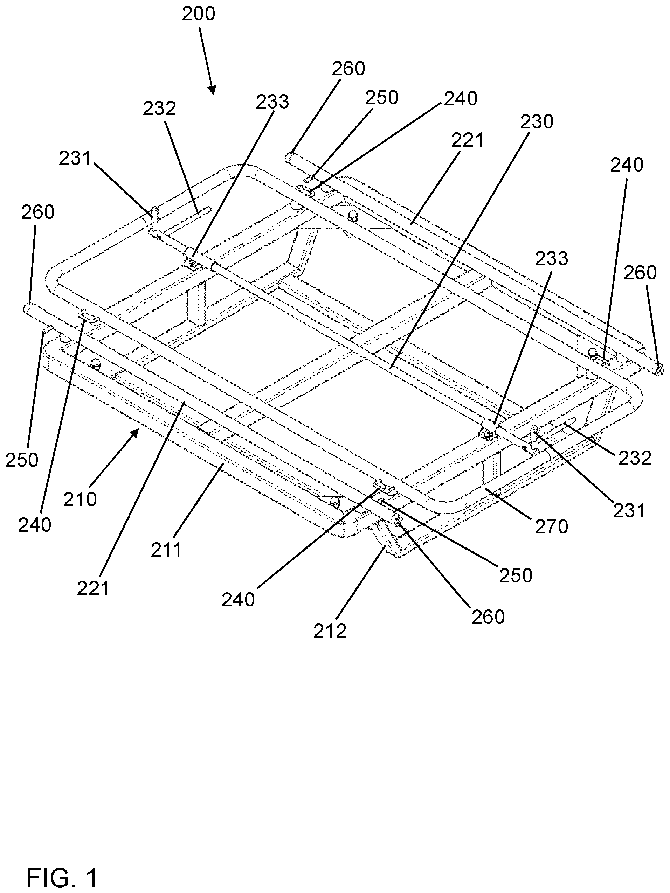

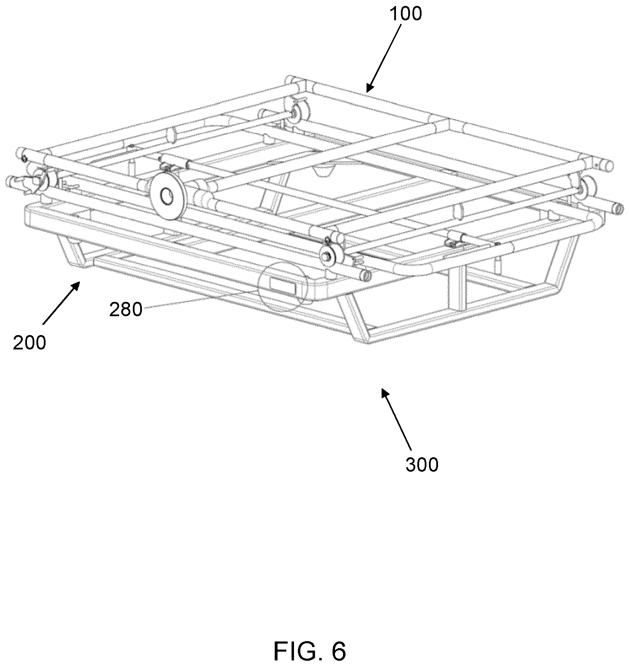

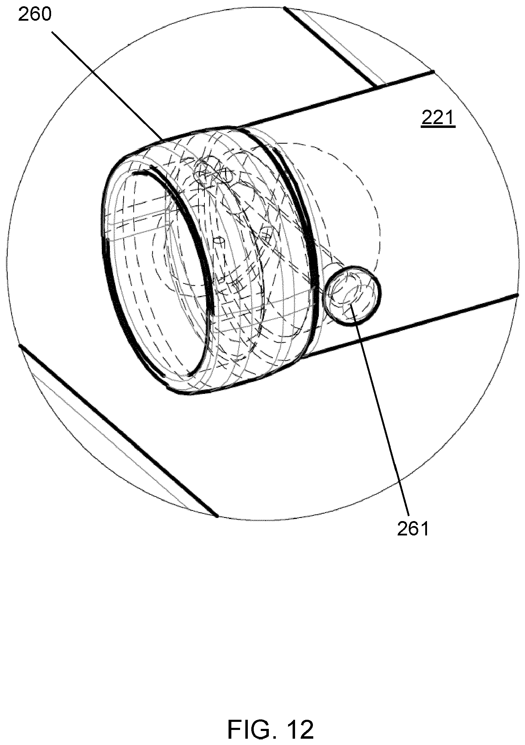

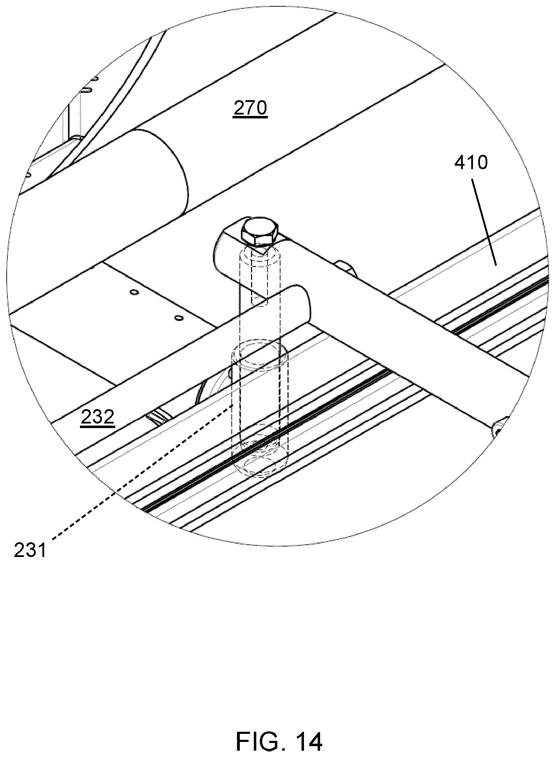

The pallet 200 (Figures 1-2, 6-14) comprises a supporting base 210.

The supporting base 210 may comprise a frame 211, substantially rectangular or square in shape (e.g. made from bent metal tubing); under said frame 211 a scaffolding 212 is fixed (preferably also made from metal tubing). The scaffolding 212 is designed to allow the insertion of forks of a pallet truck for moving the pallet 200 and the load-carrying structure 100 positioned on the pallet 200, and may, for example, be configured in the form of supports or legs.

Conveniently, the scaffolding 212 has a flared conformation, converging away from the frame 211 so as to facilitate the engagement, in the vertical direction, with other pallets or other frames/racks/shelves on which the pallet 200 is to be positioned.

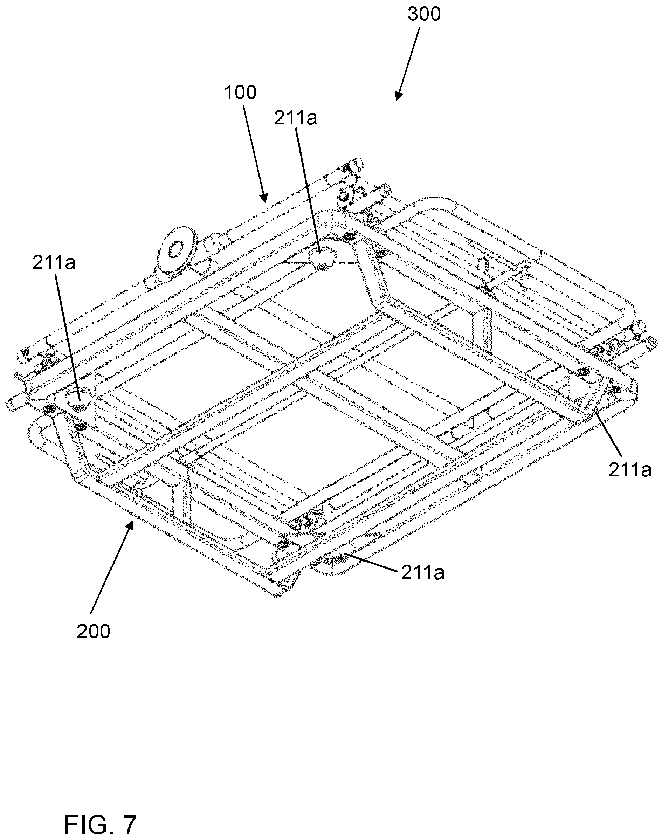

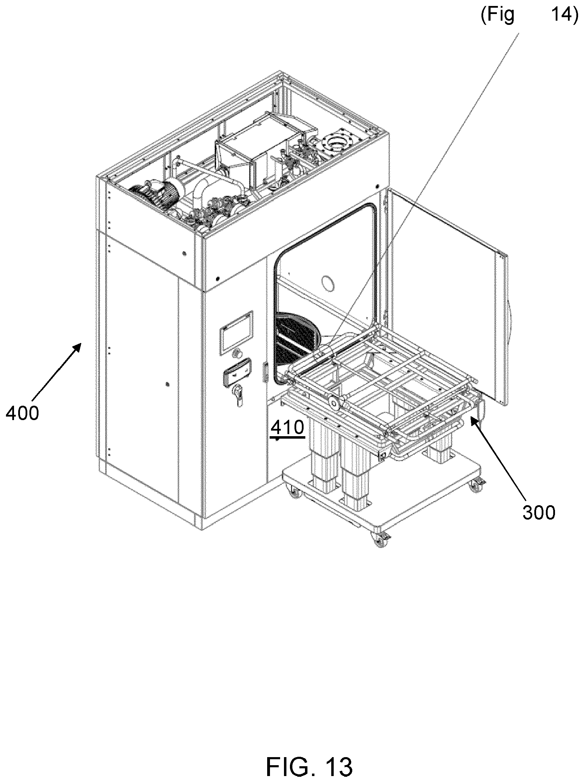

In one embodiment, the support base 210 may comprise a deformed and/or inclined and/or tapered part or surface to facilitate the centering of the pallet 200 when the latter is lowered and stacked and/or placed in racks, or raised with an elevator capable of engaging said part or surface, as shown by way of example in Figure 13. For example, at each corner of the rectangular/square profile, in a plan view, of the frame 211 there may be a conical/frustoconical element 211a facing downwards (i.e. towards the scaffolding 212), as schematically shown in Figure 7. In one implementation example, each conical/frustoconical element 211a may extend from a respective reinforcement plate, fixed to two contiguous sides of the frame 211.

In one embodiment, at least one guiding structure 220 is mounted over the supporting base 210, in particular on the side opposite the scaffolding.

Said at least one guiding structure 220 is configured to be coupled with a movement structure 120 of the load-carrying structure 100.

Preferably, the at least one guiding structure 220 comprises one or more guides 221, configured to be coupled with said movement structure 120, and particularly with the grooves 122 provided thereon.

Each guide 221 may be formed as, for example, a rod having an outer profile substantially complementary to the profile of the groove of the movement structure 120 (e.g. of the rotatable elements 121 or of the sliding/skidding elements).

In the embodiment shown in Figures 1-2, 6-14, the at least one guiding structure 220 consists of a pair of guides (rods) 221, substantially parallel to each other and parallel to the rectangular/square profile (in a plan view) of the pallet 200; on each guide 221 rest two rotatable elements (wheels) 121.

In particular, the load-carrying structure 100 is laid on the pallet 200, with the movement structure 120 coupled with the guiding structure 220. In the example shown in Figures 1-2, 6-16, the wheels 121 lie on the respective guides 221, i.e. with the groove 122 surrounding the upper part of the outer surface of a guide 221.

The coupling between the at least one guiding structure 220 and the movement structure 120 counters the movement of the load-carrying structure 100, relative to the pallet 200, in a first direction D1. This effect is preferably due to the shape of said grooves 122 and the complementary shape of said at least one guiding structure 220, e.g. of the guides (rods) 221.

Moreover, the coupling between the at least one guiding structure 220 and the movement structure 120 guides the movement of the load-carrying structure 100, relative to the pallet 200, in a second direction D2. The second direction D2 is different from the first direction D1. Preferably, the second direction D2 is transversal, in particular substantially orthogonal, to the first direction D1. The second direction D2 is preferably defined by the direction of longitudinal development of the at least one guiding structure 220, in particular of the guides (rods) 221.

The conformation of the movement structure 120 (e.g. of the rotatable elements 121) and of the at least one guiding structure 220 (e.g. of the guides 221) also makes it possible to push/pull the load-carrying structure 100. The sliding/skidding/rolling of the movement structure 120 on the at least one guiding structure 220 (e.g. the rotation of the rotatable elements 121 on the guides 221) allows such movement from/towards the pallet 200 and towards/from a washing machine 400. Such movement occurs substantially along the direction D2.

It should be noted that the movement from/towards the pallet 200 may also occur towards/from a storage area or other areas/machines that may be present in the plant. More generally, the movement of the load-carrying structure 100 from/towards the pallet 200 occurs towards/from a loading/unloading area.

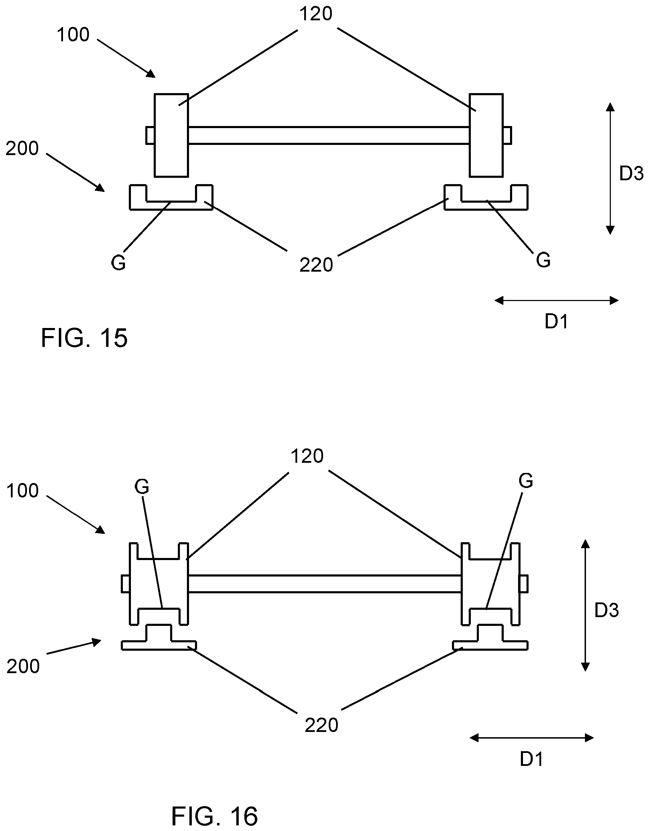

It must be pointed out that the above description has been essentially made with reference to an embodiment wherein the guiding structure 220 is mounted on the supporting base 210 of the pallet 200 and the movement structure is mounted on the frame 110 of the load-carrying structure 100. This solution is schematically shown in Figures 15-16.

Nonetheless, the invention may also have different structural configurations: in general, the guiding structure 220 and the movement structure 120 constitute a movement system. Regardless of the arrangement of the various components, the movement system allows moving the load-carrying structure 100 relative to the pallet 200.

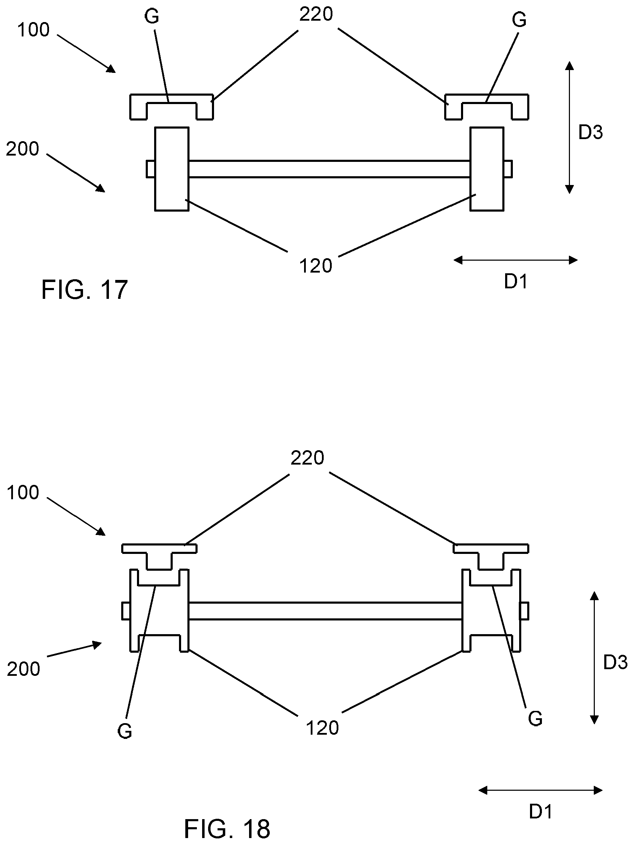

In one embodiment (Figures 17-18), the movement structure 120 may be mounted on the supporting base 210 of the pallet 200, and the guiding structure 220 may be mounted on the frame 110 of the load-carrying structure 100.

Also as concerns said one or more grooves belonging to the movement system, they may be provided on the movement structure and/or on the guiding structure.

In the schematic representation of Figures 15 and 17, the grooves G are formed on the guiding structure 220.

In the schematic representation of Figures 16 and 18, the grooves G are formed on the movement structure 120. In the case wherein the movement structure 120 is mounted on the load-carrying structure 100 (Figure 16) and comprises said rotatable elements 121, the grooves G may correspond to the above-described grooves 122.

In general, as aforesaid, the complementarity of the profiles of the guiding structure and of the movement structure (regardless of whether they belong to the load-carrying structure 100 or to the pallet 200, and of which one is provided with one or more grooves) makes it possible to guide the movement of the load-carrying structure 100 relative to the pallet 200 in the second direction D2, while countering a movement in the direction D1.

In one embodiment, the assembly 300 may comprise a gripping element 270 to facilitate the manual operations of handling the assembly 300. Preferably, the gripping element 270 is mounted on the supporting base 210 of the pallet 200. In particular, the gripping element 270 preferably has at least a portion thereof in proximity to a longitudinal end of the guides 221, and another portion at the opposite end, so as to facilitate operations on both the front and rear sides of the assembly 300.

In one embodiment, the gripping element 270 may be made from substantially continuous tubing, with a substantially rectangular/square profile and two sides substantially parallel to the second direction D2.

Preferably, the planar development of the gripping element 270 lies in a plane defined by the guides 221.

Preferably, the planar development of the gripping element is substantially parallel to the planar development of the frame 211 belonging to the supporting base 210 of the pallet 200.

Preferably, the assembly 300 comprises at least one engagement member.

The engagement member is advantageously configured to selectively allow a movement of the load-carrying structure 100, relative to the pallet 200, in the second direction.

Preferably, the engagement member can be driven between a first position and a second position. In the first position, the engagement member allows a movement of the load-carrying structure 100, relative to the pallet 200, in the second direction D2. In the second position, the engagement member counters a movement of the load-carrying structure 100, relative to the pallet 200, in the second direction D2.

Therefore, the engagement member selectively allows the load-carrying structure 100 to be moved in the second direction D2 along the guides 221.

In one embodiment, the engagement member comprises a bar 230, mounted on the supporting base 210 of the pallet 200. The bar 230 extends substantially in the second direction D2 and is rotatable about its longitudinal axis.

Preferably, in a plan view, the bar 230 protrudes, with at least a longitudinal end portion thereof, from the profile of the supporting base 210; in particular, in a plan view, the bar 230 protrudes with both of its longitudinal end portions from the profile of the supporting base. The usefulness of this feature will become apparent below in relation to the possible coupling of the pallet 200 with a portion (e.g. a wall) of a washing machine 400.

The engagement member further comprises one or more radial expansions 231, which extend radially from the bar 230.

Preferably, in the first position, the bar 230 is so positioned (rotated) that said one or more radial expansions 231 do not interfere with the load-carrying structure 100, thereby allowing a movement of the load-carrying structure 100, relative to the pallet 200, in the second direction D2.

Preferably, in the second position, the bar 230 is so positioned (rotated) that said one or more radial expansions 231 interfere with the load-carrying structure 100, thereby countering a movement of the load-carrying structure 100, relative to the pallet 200, in the second direction D2.

In the embodiment illustrated in Figures 1-2, 6-8, 13-14, the bar 230 is provided with two radial expansions 231, each one positioned near a respective longitudinal end of the bar 230 itself.

Advantageously, the radial expansions 231 are substantially parallel to each other. For example, when the engagement member is in the first position, said one or more radial expansions 231 are substantially vertical and extend upwards - i.e. away from the supporting base 210 of the pallet 200; for example, when the engagement member is in the second position, said one or more radial expansions 231 are substantially vertical and extend downwards - i.e. towards the supporting base 210 of the pallet 200.

In this way, the pallet 200 can be temporarily constrained to a loading/unloading station, preferably a loading/unloading station of a washing machine 400 in which the load-carrying structure 100 positioned on the pallet 200 is to be inserted, or from which a load-carrying structure 100 is to be extracted which must then be placed on the pallet 200. In more detail, at least one of said one or more radial expansions 231 is spaced apart, along the second direction D2, from the supporting base 210 of the pallet 200. When the load-carrying structure 100 needs to be moved towards or away from the washing machine 400, the supporting base 210 of the pallet 200 is brought substantially in contact with a wall 410 of the machine 400, near the loading/unloading mouth of the machine; in particular, one side of the supporting base 210, orthogonal to the second direction D2, is placed substantially in contact with the machine 400. When this operation is performed, the bar 230 is in a radial position such that the radial expansion 231 on that side of the supporting base 210 will not interfere with the wall 410 of the machine 400. For example, if the load-carrying structure 100 is on the pallet 200, the radial expansion 231 is oriented upwards (second position of the engagement member), thus performing its function of locking the load-carrying structure 100. It may be envisaged that, even though a load-carrying structure 100 is not present (because it has to be removed from the machine), the engagement member is nonetheless in the second position. Once the supporting base 210 of the pallet 200 is in contact with, or anyway in proximity to, the machine 400, the engagement member is brought into the first position. In this manner, the load-carrying structure 100 can be loaded from the pallet 200 to the machine 400, or vice versa. Furthermore, since the expansion 231 is oriented substantially downwards, the wall 410 of the machine 400 is confined between the expansion 231 and the supporting base 210, thereby preventing the pallet from moving away from the machine 400 and facilitating the operation of moving the load-carrying structure.

Preferably, the engagement member further comprises one or more handles 232; such one or more handles 232 may extend radially from the bar 230, and allow an operator to rotate the bar 230 about its longitudinal axis in order to switch it between the first and second positions.

The engagement member is supported by one or more hollow cylinders 233 mounted on the supporting base 210 of the pallet 200. In particular, such one or more cylinders 233 are fixed to said frame 211. Said one or more cylinders are parallel and coaxial to the bar 230; the latter is housed in such one or more cylinders 233, so as to be able to rotate about its longitudinal axis, preferably under the action of an operator, performed through said handle(s) 232.

In the example shown in Figures 1-2, 6-8, 13-14 there are two cylinders 233, each one positioned at a respective longitudinal end of the bar 230.

In one embodiment, the rotation of the bar 230 is angularly limited. For example, the allowed rotation may be 180°. More generally, the rotation of the bar 230 is limited between two end-of-stroke positions. A first end-of-stroke position preferably corresponds to the first position of the engagement member; the second end-of-stroke position corresponds to the second position of the engagement member.

Advantageously, in order to define the end-of-stroke positions, at least one of said one or more cylinders 233 is provided with a strike portion 234, which extends longitudinally from the remaining part of the cylinder; in practice, the strike portion 234 does not surround the respective portion of the bar 230 completely, but only partially. Moreover, the bar 230 is provided with a radial striker 235, positioned axially in a position corresponding to the strike portion 234 of the cylinder 233. The radial striker 235 projects radially from the bar 230 for a length sufficient to intercept the strike portion 234. Thus, as long as the radial striker 235 does not come in abutment with the strike portion 234, the bar 230 can rotate; when the radial striker 235 comes in abutment with the strike portion 234, one of said end-of-stroke positions is reached (along with one of the first and second positions of the engagement member).

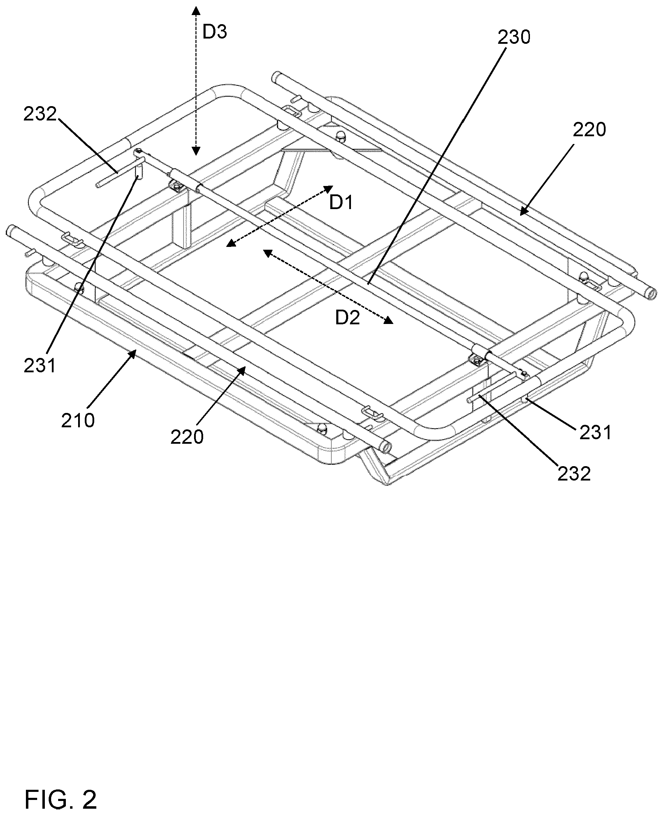

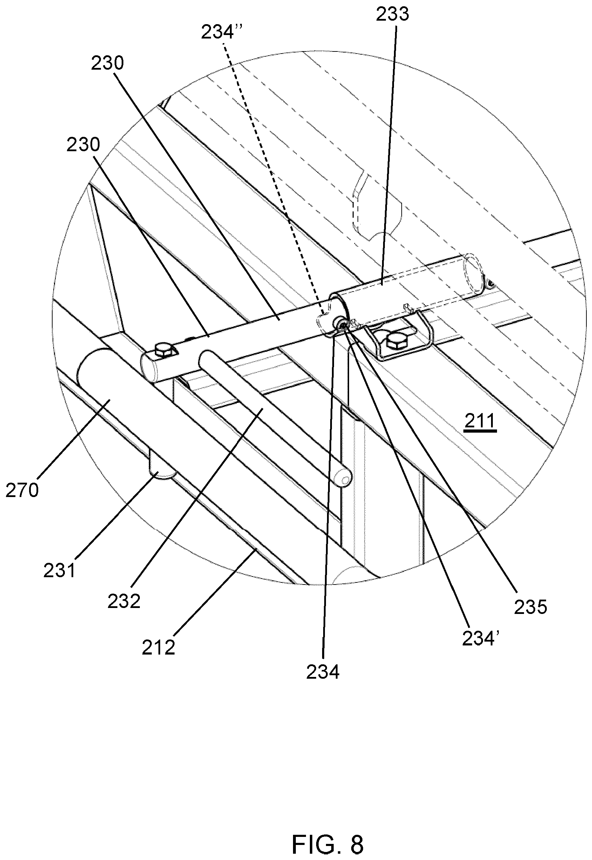

In more detail, the strike portion 234 has two opposite edges 234', 234". When the radial striker 235 is in abutment with the first edge 234', the engagement member is in the first position (shown in Figures 2 and 8); when the radial striker 235 is in abutment with the second edge 234", the engagement member is in the second position (shown in Figure 1). The fact that, through the edges 234', 234" and the radial striker 235, the first and second positions of the engagement member are obtained is dependent on the angular position of the one or more radial expansions 231 relative to the radial striker 235 and on the position and conformation of the edges 234', 234".

It should be noted that the engagement member may also have a structure/conformation other than described above; for example, a magnetic coupling may be provided to perform the function of the engagement member.

Advantageously, the assembly 300 further comprises a locking structure, configured to counter a movement of the load-carrying structure 100 in a third direction D3 which is transversal, in particular substantially orthogonal, to the plane defined by the first and second directions D1, D2. In particular, as mentioned above, the second direction D2 is preferably the one along which the load-carrying structure 100 is moved during the insertion/extraction operations, and coincides with the longitudinal development of the guide(s) 221; the first direction D1 is transversal, in particular perpendicular, to the second direction D2. Therefore, the third direction D3 is, in practice, a direction of a possible substantially vertical movement of the load-carrying structure 100 away from the pallet 200.

Preferably, the locking structure comprises one or more first locking expansions 240 and one or more second locking expansions 130.

The first locking expansions 240 are mounted on the supporting base 210 of the pallet 200 and extend horizontally. In one embodiment, the first locking expansions 240 extend from the gripping element 270. For example, there are four first locking expansions 240, each one positioned near an angular region of the rectangular/square profile of the supporting base 210.

The second locking expansions 130 are parts of the frame 110 of the load-carrying structure 100, and also extend horizontally. As schematically shown in Figure 3, the second locking expansions 130 extend transversally from respective supporting rods 131. In practice, each locking expansion 130 forms, jointly with the respective supporting rod 131, a substantially L-shaped profile. For example, there are four second locking expansions 130, each one positioned near an angular region of the rectangular/square base profile of the frame 110.

When the load-carrying structure 100 is coupled with the pallet 200, each second locking expansion 130 is in a position corresponding to a respective first locking expansion 240, but lower than said first locking expansion 240. Thus, should the load-carrying structure 100 tend to move away vertically upwards from the pallet 200 (e.g. due to undesired/unexpected external stresses), the second locking expansion 130 will abut against the respective first locking expansions 240, thereby preventing a vertical separation of the load-carrying structure 100.

It should be noted that, preferably, the locking structure 130, 240 does not interfere with any movement of the load-carrying structure 100 in the second direction D2.

In one embodiment, a further engagement member may comprise a locking mechanism 140 and a corresponding strike element 250.

The strike element 250 is mounted on the pallet 200; preferably, the strike element 250 may consist of one or more pins extending horizontally and transversally from each one of the one or more guides 221. In the example shown in Figure 1, there are four pins 250, each one positioned in proximity to a longitudinal end of one of the two guides 221.

The locking mechanism 140 is mounted on the frame 110 of the load-carrying structure 100 and can be driven between a first configuration and a second configuration. In the first configuration, the locking mechanism 140 co-operates with the strike element 250 to counter the movement of the load-carrying structure 100 relative to the pallet 100 in the second direction D2. In the second configuration, the locking mechanism 140 does not counter the movement of the load-carrying structure 100 relative to the pallet 100 in the second direction D2.

In one embodiment, the locking mechanism 140 may consist of a hook or latch (Figures 9-10), e.g. operating by gravity and/or under the action of an elastic element (e.g. a spring). In particular, a locking mechanism 140 may be provided near each one of the wheels 121. For example, each locking mechanism 140 may be oscillating about the axis of rotation of the respective wheel 121.

The Applicant observes that, in one embodiment, the locking mechanism 140 may be mounted on the pallet 200, while the strike element 250 may be mounted on the frame 110 of the load-carrying structure, resulting in substantially the same functionality.

In one embodiment, the assembly 300 may comprise a centering structure 260.

The centering structure 260 performs the function of facilitating the centering and alignment operation, in particular in the second direction D2, while bringing the assembly 300 (or even only the pallet 200) near the washing machine 400. Preferably, the centering structure 260 makes it possible to obtain a proper alignment between the guiding structure 220 (guides 221) and a respective guiding member provided in the loading/unloading station of the washing machine 400.

Preferably, the centering structure 260 comprises one or more centering elements, each one positioned at a respective axial end of one of the guides 221. Each centering element may consist of, for example, a bushing suitable to receive the terminal part of a guiding member of the washing machine 400.

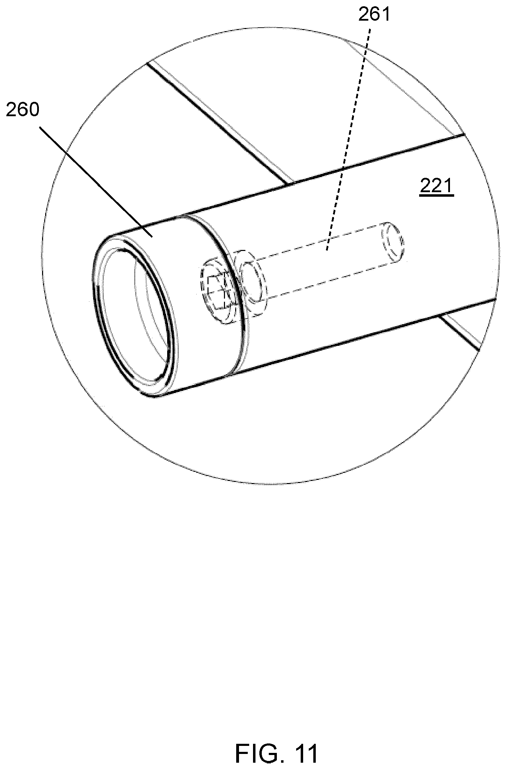

In one implementation example, the bushing is substantially fixed to the end of the guide 221, e.g. by means of a screw 261 (Figure 11).

In one implementation example, the bushing is constrained to the end of the guide 221 in an oscillating manner, so that it can rotate about a horizontal axis substantially orthogonal to the second direction D2. Along such axis the pin 262 develops, which allows the bushing to oscillate relative to the guide 221. In this way it is possible to compensate for any misalignment in the vertical direction (third direction D3) between the pallet 100 and the machine 400, e.g. caused by a difference in floor level, which might affect the trolley/elevator/pallet truck that is handling the pallet 200, and therefore the height at which the pallet 200 is when it has to be coupled with the washing machine 400.

In one embodiment, at least one tag or identification label 280, e.g. RFID, NFC, bar code, QR code, etc., may be affixed to the pallet 200 to allow tracking and/or activating specific actions and/or selecting specific recipes during the process, in particular, without being limited thereto, during the washing process, after said tag or label 280 has been read by a suitable reader.

In light of the above, the pallet 200 can be used as follows:
1) the pallet 200 (with or without the load-carrying structure 100) is lifted to a predefined height, e.g. after having been engaged by the forks of a pallet truck; alternatively, it may be supported and lifted by a trolley or an elevator; if the load-carrying structure 100 is on the pallet 200, it is held in position also by the at least one engagement member, which is in the second position;
2) the pallet 200 is moved and/or brought in proximity to a loading/unloading station, e.g. the loading/unloading station of the washing machine 400. In particular, the at least one guiding structure 220 of the pallet 200 is made to match a respective guiding member located in the loading/unloading station; said centering structure 260 can be used to advantage for this purpose;
3) the pallet 200 is engaged with, or hooked to, said loading/unloading station, e.g. of the washing machine 400; to this end, at least one radial expansion 231 of the bar 230, i.e. the at least one engagement member in its first position, can advantageously be used;
4) the load-carrying structure 100 is transferred from the loading/unloading station, e.g. of the washing machine 400, to the pallet 200 or, if the load-carrying structure 100 is already on the pallet 200, it is transferred from the pallet 200 to the loading/unloading station, e.g. of the washing machine 400; for this purpose, the at least one guiding structure 220 (in particular, the one or more guides 221) is used in co-operation with the movement structure 120 of the load-carrying structure 100, preferably the wheels 121;
5) when transfer is complete, the pallet 200 is disengaged/unhooked from the loading/unloading station, e.g. of the washing machine 400; the at least one engagement member is then brought into its second position;
6) the pallet 200 is subsequently moved away from the loading/unloading station, e.g. of the washing machine 400.

## Claims

1. Assembly for supporting and moving production elements used in production processes in the pharmaceutical industry, wherein said assembly comprises:
a load-carrying structure (100), comprising a frame (110) for supporting said production elements;
a pallet (200), associable with said load-carrying structure (100) and comprising a supporting base (210);
a movement system, comprising:
a movement structure (120), configured to allow said frame (110) to be moved relative to said supporting base (210);
at least one guiding structure (220) configured to be coupled with the movement structure (120) in such a way as to counter the movement of said load-carrying structure (100), relative to the pallet (200), in a first direction (D1), and to guide a movement of said load-carrying structure (100), relative to the pallet (200), in a second direction (D2) said assembly further comprising at least one engagement member, configured to selectively allow a movement of said load-carrying structure (100), relative to the pallet (200), in the second direction (D2)
wherein said at least one engagement member can be driven between a first position, in which it allows a movement of said load-carrying structure (100), relative to the pallet (200), in said second direction (D2), and a second position, in which it counters a movement of said load-carrying structure (100), relative to the pallet (200), in said second direction (D2)
the assembly being **characterized in that**, in the first position, the at least one engagement member is configured to be coupled with a loading/unloading station.

2. Assembly according to claim 1, wherein:
said movement structure (120) is mounted on the frame (110) of said load-carrying structure (100), and said guiding structure (220) is mounted on the supporting base (210) of said pallet (200), or
said movement structure (120) is mounted on the supporting base (210) of said pallet (200), and said guiding structure (220) is mounted on the frame (110) of said load-carrying structure (100).

3. Assembly according to claim 2, wherein said movement system has at least one groove on said guiding structure (220) for coupling with said movement structure (120), or said movement system has at least one groove on said movement structure (120) for coupling with said guiding structure (220).

4. Assembly according to any one of the preceding claims, wherein:
the movement structure (120) comprises one or more rotatable elements (121);
the guiding structure (220) comprises at least one guide (221) configured to be coupled with said one or more rotatable elements (121).

5. Assembly according to claim 4 when dependent on claim 3, wherein said respective groove (122) extends along an outer circumference of the respective rotatable element (121).

6. Assembly according to any one of the preceding claims, wherein the at least one engagement member comprises:
a bar (230) mounted on the supporting base (210) of the pallet (200) and extending substantially in the second direction (D2), said bar (230) being rotatable about its longitudinal axis, and
one or more radial expansions (231) extending radially from said bar (230).

7. Assembly according to claim 6, wherein, in the first position, the bar (230) is so rotated that said one or more radial expansions (231) do not interfere with the load-carrying structure (100), and, in the second position, the bar (230) is so rotated that said one or more radial expansions (231) interfere with the load-carrying structure (100) and counter a movement of the load-carrying structure (100), relative to the pallet (200), in the second direction (D2).

8. Assembly according to any one of the preceding claims, further comprising a locking structure, configured to counter a movement of said load-carrying structure (100), relative to said pallet (200), in a third direction (D3) transversal to a plane defined by said first and second directions (D1, D2).

9. Assembly according to claim 8, wherein the locking structure comprises:
one or more first locking expansions (240), mounted on the supporting base (210) of the pallet (200) and extending horizontally;
one or more second locking expansions (130) belonging to the frame (110) of the load-carrying structure (100) and extending horizontally,
wherein, when the load-carrying structure (100) is coupled with the pallet (200), said one or more second locking expansions (130) are located in a position corresponding to said one or more first locking expansions (240), but lower than said one or more first locking expansions (240).

10. Assembly according to any one of the preceding claims, wherein a further engagement member comprises:
a strike element (250);
a locking mechanism (140) which can be driven between a first configuration, in which it co-operates with said strike element (250) to counter the movement of the load-carrying structure (100) relative to the pallet (200) in the second direction (D2), and a second configuration, in which it does not counter the movement of the load-carrying structure (100) relative to the pallet (200) in the second direction (D2).

11. Assembly according to claim 10, wherein said strike element (250) is mounted on said pallet (200) and said locking mechanism (140) is mounted on the frame (110) of said load-carrying structure (100), or said strike element (250) is mounted on the frame (110) of said load-carrying structure (100) and said locking mechanism (140) is mounted on said pallet (200).

12. Assembly according to any one of the preceding claims, further comprising a centering structure (260), configured to provide centering and alignment, in particular in the second direction (D2), during an operation of bringing the pallet (200) close to a washing machine (400).

13. Assembly according to claim 12 when dependent on claim 4, wherein said centering structure (260) comprises one or more centering elements, each one positioned at a respective axial end of one of said one or more guides (221), wherein each centering element may be either fixed or oscillating relative to said guide (221).

14. Pallet for supporting and moving load-carrying structures supporting production elements used in production processes in the pharmaceutical industry, wherein said pallet (200) comprises:
a supporting base (210);
at least one of:
at least one guiding structure (220), mounted on said supporting base (210) and configured to be coupled with a movement structure (120) of a load-carrying structure (100) in such a way as to counter the movement of said load-carrying structure (100), relative to said pallet (200), in a first direction (D1), and to guide a movement of said load-carrying structure (100), relative to said pallet (200), in a second direction (D2), and
at least one movement structure (120), mounted on said supporting base (210) and configured to be coupled with a guiding structure (220) of a load-carrying structure (100) in such a way as to counter the movement of said load-carrying structure (100), relative to said pallet (200), in a first direction (D1), and to guide a movement of said load-carrying structure (100), relative to said pallet (200), in a second direction (D2)
said pallet further comprising at least one engagement member, configured to selectively allow a movement of said load-carrying structure (100), relative to the pallet (200), in the second direction (D2)
wherein said at least one engagement member can be driven between a first position, in which it allows a movement of said load-carrying structure (100), relative to the pallet (200), in said second direction (D2), and a second position, in which it counters a movement of said load-carrying structure (100), relative to the pallet (200), in said second direction (D2)
the pallet being **characterized in that**, in the first position, the at least one engagement member is configured to be coupled with a loading/unloading station.

15. Method for loading/unloading a load-carrying structure (100) onto/from a loading/unloading station, e.g. a loading/unloading station of a washing machine (400), said load-carrying structure (100) being configured for supporting and moving production elements used in production processes in the pharmaceutical industry, said method comprising:
providing a pallet (200) according to claim 14;
bringing said pallet (200) near said loading/unloading station;
transferring, by means of said guiding structure (220) and said movement structure (120), said load-carrying structure (100) from said loading/unloading station to said pallet (200), or from said pallet (200) to said loading/unloading station
said method comprising holding said load-carrying structure (100) in position on said pallet (200) by means of said at least one engagement member
said method being **characterized by** comprising, prior to transferring said load-carrying structure (100), coupling said pallet (200) with said loading/unloading station by means of said at least one engagement member.

## Patentansprüche

1. Anordnung zum Tragen und Bewegen von Produktionselementen, die in Produktionsvorgängen in der pharmazeutischen Industrie verwendet werden, wobei die Anordnung Folgendes umfasst:
eine lasttragende Struktur (100), die einen Rahmen (110) umfasst, zum Tragen der Produktionselemente;
eine Palette (200), die mit der lasttragenden Struktur (100) verbunden werden kann und eine Tragbasis (210) umfasst;
ein Bewegungssystem, umfassend:
eine Bewegungsstruktur (120), die dazu ausgelegt ist, zu ermöglichen, dass der Rahmen (110) relativ zu der Tragbasis (210) bewegt wird;
mindestens eine Führungsstruktur (220), die dazu ausgelegt ist, mit der Bewegungsstruktur (120) derart gekoppelt zu werden, dass sie der Bewegung der lasttragenden Struktur (100) relativ zu der Palette (200) in einer ersten Richtung (D1) entgegenwirkt und eine Bewegung der lasttragenden Struktur (100) relativ zu der Palette (200) in einer zweiten Richtung (D2) führt,
wobei die Anordnung ferner mindestens ein Eingriffselement umfasst, das dazu ausgelegt ist, selektiv eine Bewegung der lasttragenden Struktur (100) relativ zu der Palette (200) in der zweiten Richtung (D2) zu ermöglichen,
wobei das mindestens eine Eingriffselement zwischen einer ersten Position, in der es eine Bewegung der lasttragenden Struktur (100) relativ zu der Palette (200) in der zweiten Richtung (D2) ermöglicht, und einer zweiten Position angetrieben werden kann, in der es einer Bewegung der lasttragenden Struktur (100) relativ zu der Palette (200) in der zweiten Richtung (D2) entgegenwirkt,
wobei die Anordnung **dadurch gekennzeichnet ist, dass** das mindestens eine Eingriffselement dazu ausgelegt ist, mit einer Lade-/Entladestation gekoppelt zu werden.

2. Anordnung nach Anspruch 1, wobei:
die Bewegungsstruktur (120) am Rahmen (110) der lasttragenden Struktur (100) montiert ist und die Führungsstruktur (220) auf der Tragbasis (210) der Palette (200) montiert ist, oder
die Bewegungsstruktur (120) auf der Tragbasis (210) der Palette (200) montiert ist und die Führungsstruktur (220) am Rahmen (110) der lasttragenden Struktur (100) montiert ist.

3. Anordnung nach Anspruch 2, wobei das Bewegungssystem mindestens eine Nut auf der Führungsstruktur (220) zur Kopplung mit der Bewegungsstruktur (120) aufweist oder das Bewegungssystem mindestens eine Nut auf der Bewegungsstruktur (120) zur Kopplung mit der Führungsstruktur (220) aufweist.

4. Anordnung nach einem der vorhergehenden Ansprüche, wobei:
die Bewegungsstruktur (120) ein oder mehrere drehbare Elemente (121) umfasst;
die Führungsstruktur (220) mindestens eine Führung (221) umfasst, die dazu ausgelegt ist, mit dem einen oder den mehreren drehbaren Elementen (121) gekoppelt zu werden.

5. Anordnung nach Anspruch 4, wenn abhängig von Anspruch 3, wobei die jeweilige Nut (122) entlang eines Außenumfangs des jeweiligen drehbaren Elements (121) verläuft.

6. Anordnung nach einem der vorhergehenden Ansprüche, wobei das mindestens eine Eingriffselement Folgendes umfasst:
eine Stange (230), die auf der Tragbasis (210) der Palette (200) montiert ist und sich im Wesentlichen in der zweiten Richtung (D2) erstreckt, wobei die Stange (230) um ihre Längsachse drehbar ist, und
eine oder mehrere radiale Erweiterungen (231), die sich radial von der Stange (230) erstrecken.

7. Anordnung nach Anspruch 6, wobei die Stange (230) in der ersten Position so gedreht ist, dass die eine oder die mehreren Erweiterungen (231) die lasttragende Struktur (100) nicht behindern, und die Stange (230) in der zweiten Position so gedreht ist, dass die eine oder die mehreren radialen Erweiterungen (231) die lasttragende Struktur (100) behindern und einer Bewegung der lasttragenden Struktur (100) relativ zu der Palette (200) in der zweiten Richtung (D2) entgegenwirken.

8. Anordnung nach einem der vorhergehenden Ansprüche, ferner umfassend eine Verriegelungsstruktur, die dazu ausgelegt ist, einer Bewegung der lasttragenden Struktur (100) relativ zu der Palette (200) in einer dritten Richtung (D3) quer zu einer Ebene entgegenzuwirken, die durch die erste und die zweite Richtung (D1, D2) definiert ist.

9. Anordnung nach Anspruch 8, wobei die Verriegelungsstruktur Folgendes umfasst:
eine oder mehrere erste Verriegelungserweiterungen (240), die auf der Tragbasis (210) der Palette (200) montiert sind und sich horizontal erstrecken;
eine oder mehrere zweite Verriegelungserweiterungen (130), die zum Rahmen (110) der lasttragenden Struktur (100) gehören und sich horizontal erstrecken;
wobei sich die eine oder die mehreren zweiten Verriegelungserweiterungen (130) in einer Position, die der einen oder den mehreren ersten Verriegelungserweiterungen (240) entspricht, aber unter der einen oder der mehreren ersten Verriegelungserweiterungen (240) befinden, wenn die lasttragende Struktur (100) mit der Palette (200) gekoppelt ist.

10. Anordnung nach einem der vorhergehenden Ansprüche, wobei ein weiteres Eingriffselement Folgendes umfasst:
ein Anschlagelement (250);
einen Verriegelungsmechanismus (140), der zwischen einer ersten Konfiguration, in der er mit dem Anschlagelement (250) zusammenwirkt, um der Bewegung der lasttragenden Struktur (100) relativ zu der Palette (200) in der zweiten Richtung (D2) entgegenzuwirken, und einer zweiten Konfiguration angetrieben werden kann, in der er einer Bewegung der lasttragenden Struktur (100) relativ zu der Palette (200) in der zweiten Richtung (D2) nicht entgegenwirkt.

11. Anordnung nach Anspruch 10, wobei das Anschlagelement (250) auf der Palette (200) montiert ist und der Verriegelungsmechanismus (140) am Rahmen (110) der lasttragenden Struktur (100) montiert ist oder das Anschlagelement (250) am Rahmen (110) der lasttragenden Struktur (100) montiert ist und der Verriegelungsmechanismus (140) auf der Palette (200) montiert ist.

12. Anordnung nach einem der vorhergehenden Ansprüche, ferner umfassend eine Zentrierstruktur (260), die dazu ausgelegt ist, während eines Vorgangs, die Palette (200) in die Nähe einer Waschmaschine (400) zu bringen, Zentrierung und Ausrichtung insbesondere in der zweiten Richtung (D2) bereitzustellen.

13. Anordnung nach Anspruch 12, wenn abhängig von Anspruch 4, wobei die Zentrierstruktur (260) ein oder mehrere Zentrierelemente umfasst, die jeweils an einem jeweiligen axialen Ende einer der einen oder der mehreren Führungen (221) positioniert sind, wobei jedes Zentrierelement entweder fest oder schwingend relativ zu der Führung (221) sein kann.

14. Palette zum Tragen und Bewegen von lasttragenden Strukturen, die Produktionselemente tragen, die in Produktionsvorgängen in der pharmazeutischen Industrie verwendet werden, wobei die Palette (200) Folgendes umfasst:
eine Tragbasis (210);
mindestens eines von Folgenden:
mindestens eine Führungsstruktur (220), die auf der Tragbasis (210) montiert und dazu ausgelegt ist, mit der Bewegungsstruktur (120) einer lasttragenden Struktur (100) derart gekoppelt zu werden, dass sie der Bewegung der lasttragenden Struktur (100) relativ zu der Palette (200) in einer ersten Richtung (D1) entgegenwirkt und eine Bewegung der lasttragenden Struktur (100) relativ zu der Palette (200) in einer zweiten Richtung (D2) führt, und
mindestens eine Bewegungsstruktur (120), die auf der Tragbasis (210) montiert und dazu ausgelegt ist, mit einer Führungsstruktur (220) einer lasttragenden Struktur (100) derart gekoppelt zu werden, dass sie der Bewegung der lasttragenden Struktur (100) relativ zu der Palette (200) in einer ersten Richtung (D1) entgegenwirkt und eine Bewegung der lasttragenden Struktur (100) relativ zu der Palette (200) in einer zweiten Richtung (D2) führt,
wobei die Palette ferner mindestens ein Eingriffselement umfasst, das dazu ausgelegt ist, selektiv eine Bewegung der lasttragenden Struktur (100) relativ zu der Palette (200) in der zweiten Richtung (D2) zu ermöglichen,
wobei das mindestens eine Eingriffselement zwischen einer ersten Position, in der es eine Bewegung der lasttragenden Struktur (100) relativ zu der Palette (200) in der zweiten Richtung (D2) ermöglicht, und einer zweiten Position angetrieben werden kann, in der es einer Bewegung der lasttragenden Struktur (100) relativ zu der Palette (200) in der zweiten Richtung (D2) entgegenwirkt,
wobei die Palette **dadurch gekennzeichnet ist, dass** das mindestens eine Eingriffselement dazu ausgelegt ist, mit einer Lade-/Entladestation gekoppelt zu werden.

15. Verfahren zum Laden/Entladen einer lasttragenden Struktur (100) auf eine/von einer Lade-/Entladestation, z. B. einer Lade-/Entladestation einer Waschmaschine (400), wobei die lasttragende Struktur (100) zum Tragen und Bewegen von Produktionselementen ausgelegt ist, die in Produktionsvorgängen in der pharmazeutischen Industrie verwendet werden, wobei das Verfahren Folgendes umfasst:
Bereitstellen einer Palette (200) nach Anspruch 14;
Bringen der Palette (200) in die Nähe der Lade-/Entladestation;
Übertragen der lasttragenden Struktur (100) mittels der Führungsstruktur (220) und der Bewegungsstruktur (120) von der Lade-/Entladestation auf die Palette (200) oder von der Palette (200) auf die Lade-/Entladestation.
wobei das Verfahren Halten der lasttragenden Struktur (100) in Position auf der Palette (200) mittels mindestens eines Eingriffselements umfasst;
wobei das Verfahren **dadurch gekennzeichnet ist, dass** es vor dem Übertragen der lasttragenden Struktur (100) Koppeln der Palette (200) mit der Lade-/Entladestation mittels des mindestens einen Eingriffselements umfasst.

## Revendications

1. Ensemble pour supporter et déplacer des éléments de production utilisés dans des processus de production dans l'industrie pharmaceutique, dans lequel ledit ensemble comprend :
une structure porteuse (100), comprenant un châssis (110) pour supporter lesdits éléments de production ;
une palette (200), associable à ladite structure porteuse (100) et comprenant une base de support (210) ;
un système de déplacement, comprenant :
une structure de déplacement (120), configurée pour permettre audit châssis (110) d'être déplacé par rapport à ladite base de support (210) ;
au moins une structure de guidage (220) configurée pour être couplée à la structure de déplacement (120) de manière à s'opposer au déplacement de ladite structure porteuse (100), par rapport à la palette (200), dans une première direction (D1), et à guider un déplacement de ladite structure porteuse (100), par rapport à la palette (200), dans une deuxième direction (D2) ;
ledit ensemble comprenant en outre au moins un organe d'engagement, configuré pour permettre sélectivement un déplacement de ladite structure porteuse (100), par rapport à la palette (200), dans la deuxième direction (D2) ;
dans lequel ledit au moins un organe d'engagement peut être entraîné entre une première position, dans laquelle il permet un déplacement de ladite structure porteuse (100), par rapport à la palette (200), dans ladite deuxième direction (D2), et une deuxième position, dans laquelle il s'oppose à un déplacement de ladite structure porteuse (100), par rapport à la palette (200), dans ladite deuxième direction (D2) ;
l'ensemble étant **caractérisé en ce que**, dans la première position, l'au moins un organe d'engagement est configuré pour être couplé à une station de chargement/déchargement.

2. Ensemble selon la revendication 1, dans lequel :
ladite structure de déplacement (120) est montée sur le châssis (110) de ladite structure porteuse (100), et ladite structure de guidage (220) est montée sur la base de support (210) de ladite palette (200), ou
ladite structure de déplacement (120) est montée sur la base de support (210) de ladite palette (200), et ladite structure de guidage (220) est montée sur le châssis (110) de ladite structure porteuse (100).

3. Ensemble selon la revendication 2, dans lequel ledit système de déplacement comporte au moins une rainure sur ladite structure de guidage (220) pour un couplage avec ladite structure de déplacement (120), ou ledit système de déplacement comporte au moins une rainure sur ladite structure de déplacement (120) pour un couplage avec ladite structure de guidage (220).

4. Ensemble selon l'une quelconque des revendications précédentes, dans lequel :
la structure de déplacement (120) comprend un ou plusieurs éléments rotatifs (121) ;
la structure de guidage (220) comprend au moins un guide (221) configuré pour être couplé avec ledit un ou plusieurs éléments rotatifs (121).

5. Ensemble selon la revendication 4 lorsqu'elle dépend de la revendication 3, dans lequel ladite rainure respective (122) s'étend le long d'une circonférence externe de l'élément rotatif respectif (121).

6. Ensemble selon l'une quelconque des revendications précédentes, dans lequel l'au moins un organe d'engagement comprend :
une barre (230) montée sur la base de support (210) de la palette (200) et s'étendant sensiblement dans la deuxième direction (D2), ladite barre (230) étant rotative autour de son axe longitudinal, et
une ou plusieurs extensions radiales (231) s'étendant radialement depuis ladite barre (230).

7. Ensemble selon la revendication 6, dans lequel, dans la première position, la barre (230) est tournée de telle sorte que ladite une ou plusieurs extensions radiales (231) n'interfèrent pas avec la structure porteuse (100), et, dans la deuxième position, la barre (230) est tournée de telle sorte que ladite une ou plusieurs extensions radiales (231) interfèrent avec la structure porteuse (100) et s'opposent à un déplacement de la structure porteuse (100), par rapport à la palette (200), dans la deuxième direction (D2).

8. Ensemble selon l'une quelconque des revendications précédentes, comprenant en outre une structure de verrouillage, configurée pour s'opposer à un déplacement de ladite structure porteuse (100), par rapport à ladite palette (200), dans une troisième direction (D3) transversale à un plan défini par lesdites première et deuxième directions (D1, D2).

9. Ensemble selon la revendication 8, dans lequel la structure de verrouillage comprend :
une ou plusieurs premières extensions de verrouillage (240), montées sur la base de support (210) de la palette (200) et s'étendant horizontalement ;
une ou plusieurs deuxièmes extensions de verrouillage (130) appartenant au châssis (110) de la structure porteuse (100) et s'étendant horizontalement,
dans lequel, lorsque la structure porteuse (100) est couplée à la palette (200), ladite une ou plusieurs deuxièmes extensions de verrouillage (130) sont situées dans une position correspondant à ladite une ou plusieurs premières extensions de verrouillage (240), mais plus bas que ladite une ou plusieurs premières extensions de verrouillage (240).

10. Ensemble selon l'une quelconque des revendications précédentes, dans lequel un autre organe d'engagement comprend :
un élément de butée (250) ;
un mécanisme de verrouillage (140) qui peut être entraîné entre une première configuration, dans laquelle il coopère avec ledit élément de butée (250) pour s'opposer au déplacement de la structure porteuse (100) par rapport à la palette (200) dans la deuxième direction (D2), et une deuxième configuration, dans laquelle il ne s'oppose pas au déplacement de la structure porteuse (100) par rapport à la palette (200) dans la deuxième direction (D2).

11. Ensemble selon la revendication 10, dans lequel ledit élément de butée (250) est monté sur ladite palette (200) et ledit mécanisme de verrouillage (140) est monté sur le châssis (110) de ladite structure porteuse (100), ou ledit élément de butée (250) est monté sur le châssis (110) de ladite structure porteuse (100) et ledit mécanisme de verrouillage (140) est monté sur ladite palette (200).

12. Ensemble selon l'une quelconque des revendications précédentes, comprenant en outre une structure de centrage (260), configurée pour assurer le centrage et l'alignement, en particulier dans la deuxième direction (D2), lors d'une opération consistant à approcher la palette (200) d'une machine à laver (400).

13. Ensemble selon la revendication 12 lorsqu'elle dépend de la revendication 4, dans lequel ladite structure de centrage (260) comprend un ou plusieurs éléments de centrage, chacun étant positionné à une extrémité axiale respective de l'un desdits un ou plusieurs guides (221), dans lequel chaque élément de centrage peut être soit fixe, soit oscillant par rapport audit guide (221).

14. Palette pour supporter et déplacer des structures porteuses supportant des éléments de production utilisés dans des processus de production dans l'industrie pharmaceutique, dans laquelle ladite palette (200) comprend :
une base de support (210) ;
au moins l'un parmi :
au moins une structure de guidage (220), montée sur ladite base de support (210) et configurée pour être couplée à une structure de déplacement (120) d'une structure porteuse (100) de manière à s'opposer au déplacement de ladite structure porteuse (100), par rapport à ladite palette (200), dans une première direction (D1), et à guider un déplacement de ladite structure porteuse (100), par rapport à ladite palette (200), dans une deuxième direction (D2), et
au moins une structure de déplacement (120), montée sur ladite base de support (210) et configurée pour être couplée à une structure de guidage (220) d'une structure porteuse (100) de manière à s'opposer au déplacement de ladite structure porteuse (100), par rapport à ladite palette (200), dans une première direction (D1), et à guider un déplacement de ladite structure porteuse (100), par rapport à ladite palette (200), dans une deuxième direction (D2) ;
ladite palette comprenant en outre au moins un organe d'engagement, configuré pour permettre sélectivement un déplacement de ladite structure porteuse (100), par rapport à la palette (200), dans la deuxième direction (D2) ;
dans laquelle ledit au moins un organe d'engagement peut être entraîné entre une première position, dans laquelle il permet un déplacement de ladite structure porteuse (100), par rapport à la palette (200), dans ladite deuxième direction (D2), et une deuxième position, dans laquelle il s'oppose à un déplacement de ladite structure porteuse (100), par rapport à la palette (200), dans ladite deuxième direction (D2) ;
la palette étant **caractérisée en ce que**, dans la première position, l'au moins un organe d'engagement est configuré pour être couplé à une station de chargement/déchargement.

15. Procédé pour charger/décharger une structure porteuse (100) sur/depuis une station de chargement/déchargement, par exemple une station de chargement/déchargement d'une machine à laver (400), ladite structure porteuse (100) étant configurée pour supporter et déplacer des éléments de production utilisés dans des processus de production dans l'industrie pharmaceutique, ledit procédé comprenant :
fournir une palette (200) selon la revendication 14 ;
amener ladite palette (200) à proximité de ladite station de chargement/déchargement ;
transférer, au moyen de ladite structure de guidage (220) et de ladite structure de déplacement (120), ladite structure porteuse (100) de ladite station de chargement/déchargement à ladite palette (200), ou de ladite palette (200) à ladite station de chargement/déchargement ;
ledit procédé comprenant le maintien en position de ladite structure porteuse (100) sur ladite palette (200) au moyen dudit au moins un organe d'engagement ;
ledit procédé étant **caractérisé en ce qu'**il comprend, avant le transfert de ladite structure porteuse (100), le couplage de ladite palette (200) avec ladite station de chargement/déchargement au moyen dudit au moins un organe d'engagement.
